# FASCICULE DE BREVET EUROPEEN

(11) **EP 1 672 743 B1**
(45) Date de publication et mention de la délivrance du brevet: **18.05.2011**
(21) Numéro de dépôt: 05111391.8
(22) Date de dépôt: 28.11.2005
(51) Int. Cl.: H01R 9/26, H02B 1/052

(54) **Dispositif de verrouillage d'un appareil électrique sur un rail de support**
Verriegelungseinrichtung einer elektrischen Vorrichtung an einer Tragschiene
Device for locking an electric apparatus onto a supporting rail

(30) Priorité: 16.12.2004 FR 0453031
(43) Date de publication de la demande: 21.06.2006
(73) Titulaire: Schneider Electric Industries SAS, 92500 Rueil-Malmaison (FR)
(72) Inventeur: Portal, Alex, 06410, Biot (FR)
(74) Mandataire: Bié, Nicolas

(56) Documents cités:
- EP-A- 0 978 913
- WO-A-00/62385
- DE-A1- 19 709 811
- US-A- 5 842 889
- US-B1- 6 293 820

## Description

La présente invention se rapporte à un dispositif de fixation d'un appareil électrique sur un rail de support présentant deux rebords opposés. L'invention est particulièrement adaptée pour la fixation d'un appareil électrique sur un rail DIN.

Le document EP 0 978 913 décrit un tel dispositif de fixation d'un appareil électrique sur un rail DIN.

Il est connu par le brevet US 5,775,955 un dispositif de fixation d'un module électronique sur un rail DIN présentant deux rebords opposés coplanaires. Le dispositif de fixation comporte deux plaquettes distinctes et indépendantes destinées à être insérées par coulissement dans deux ouvertures latérales formées sur le corps du module. Chaque plaquette permet de venir bloquer le module sur un rebord du rail. Dans ce brevet, la fixation du module s'avère peu pratique car elle nécessite deux manipulations successives.

Il est également connu par le brevet US 5,704,805 un dispositif de fixation d'un appareil électrique sur un rail DIN présentant deux rebords opposés comportant un unique point de commande. Pour cela, le dispositif comporte deux crochets destinés à recevoir chacun un rebord du rail et un actionneur apte à commander le mouvement simultané des deux crochets. L'actionneur est composé d'une vis agissant sur les deux crochets par l'intermédiaire d'une platine. Le vissage/dévissage de la vis provoque le déplacement de la platine qui provoque à son tour le déplacement des crochets.

Dans un tel dispositif, même si le moyen de commande est unique pour verrouiller l'appareil sur les deux rebords du rail, il nécessite un moyen de commande spécifique ce qui augmente notamment le nombre de pièces nécessaire pour le fabriquer. En outre, avec une telle configuration, un utilisateur doit exercer une action sur la vis à l'aide d'un tournevis pendant qu'il maintient l'appareil électrique sur le rail, ce qui s'avère gênant à l'usage. Enfin, un tel dispositif de fixation n'est accessible que de l'intérieur de l'appareil électrique et s'avère donc impossible à manipuler lorsque par exemple l'appareil est fermé et prêt à l'emploi.

Les documents US 6,293,820, DE 197 09 811, US 5,842,889 et WO 00/62385 proposent tous des dispositifs d'accrochage comportant un moyen d'actionnement accessible de l'extérieur par l'opérateur et permettant d'actionner simultanément deux moyens d'accrochage sur chacun des rebords du rail. Le document US 5,842,889 décrit notamment un dispositif de fixation comportant une tige mobile en translation dotée d'une extrémité de préhension et d'une extrémité coopérant avec un mécanisme d'actionnement composé notamment de deux branches souples reliées à l'appareil et dotées de moyens d'accrochage. La translation de la tige en direction du rail provoque un étirement des branches et un serrage de l'appareil sur le rail.

Dans ces derniers documents, l'organe d'actionnement est également spécifique et permet d'actionner simultanément les deux moyens d'accrochage sur chacun des rebords du rail de support.

Le but de l'invention est de proposer un dispositif de verrouillage d'un appareil électrique sur un rail de support qui soit simple dans sa conception et dans son utilisation tout en permettant un très bon accrochage de l'appareil électrique.

Ce but est atteint par un dispositif de verrouillage selon la revendication 1.

Le dispositif de verrouillage selon l'invention permet de venir verrouiller un appareil électrique sur le rail à partir d'une seule manoeuvre en entraînant le mouvement du second moyen de fixation par le mouvement du premier moyen de fixation.

Selon l'invention, c'est donc en commandant en translation le premier moyen de fixation que l'on actionne simultanément en rotation le second moyen de fixation.

Selon l'invention, les moyens d'entraînement comprennent un organe d'actionnement apte à opérer un mouvement de translation solidaire du mouvement du premier moyen de fixation. Selon l'invention, le mouvement de translation de l'organe d'actionnement effectué par l'opérateur pour accrocher l'appareil électrique sur le rail de support est donc celui permettant d'actionner le premier moyen de fixation. Contrairement aux brevets antérieurs, une seule et même pièce sert donc pour l'actionnement du dispositif et pour effectuer l'accrochage sur l'un des rebords du rail.

Selon une autre particularité, le mouvement de translation de l'organe d'actionnement est réalisé perpendiculairement à l'axe du rail de support et parallèlement à un plan d'appui formé par les rebords du rail de support. Dans les documents DE 197 09 811 et US 5,842,889, le mouvement de l'organe d'actionnement est réalisé perpendiculairement à l'axe du rail et perpendiculairement au plan d'appui formé par les rebords du rail de support.

Selon l'invention, le second moyen de fixation comporte deux points de fixation distincts sur le rebord du rail de support. Ainsi le verrouillage de l'appareil électrique sur le rail est réalisé en trois points distincts ce qui permet d'obtenir une parfaite stabilité de l'appareil sur le rail. Selon l'invention, le verrouillage en trois points de l'appareil sur le rail de support est réalisé par un seul mouvement de commande.

Selon un premier mode de réalisation de l'invention, le second moyen de fixation comporte, pour chacun de ses points de fixation, une biellette solidaire de l'appareil électrique et montée en rotation sur celui-ci, ladite biellette comportant une extrémité montée dans un rail de guidage formé dans l'organe d'actionnement et une extrémité libre apte à venir bloquer ledit appareil électrique sur un rebord du rail de support.

Selon un second mode de réalisation de l'invention, le second moyen de fixation comporte pour chacun de ses points de fixation une biellette solidaire de l'appareil électrique et montée en rotation sur celui-ci, ladite biellette et l'organe d'actionnement étant reliées par l'intermédiaire d'une pièce déformable de manière élastique.

Selon une particularité de ce second mode de réalisation, la biellette, la pièce déformable de manière élastique et l'organe d'actionnement ne font qu'une seule pièce.

Selon l'invention, le mouvement de translation de l'organe d'actionnement entraîne les rotations des deux biellettes dans des sens opposés.

Avantageusement, le dispositif de fixation selon l'invention comprend deux biellettes identiques montées en parallèle, symétriquement par rapport à l'axe de translation de l'organe d'actionnement. Avec une telle disposition, le verrouillage de l'appareil électrique sur le rail est réalisé en trois points distincts, un point sur le rebord supérieur du rail de support et deux points sur le rebord inférieur du rail de support.

Avantageusement, à son extrémité libre, la biellette présente une nervure dans laquelle est apte à venir se loger le rebord du rail de support lorsque le second moyen de fixation est dans sa position de verrouillage. Ceci permet d'améliorer le verrouillage de l'appareil électrique sur le rail de support.

Selon une autre particularité, l'organe d'actionnement est à commande manuelle. L'organe d'actionnement est par exemple accessible de l'extérieur de l'appareil électrique. Il pourra s'agir par exemple d'une languette qu'il est possible de tirer ou de pousser pour actionner l'organe d'actionnement et donc les biellettes reliées à l'organe d'actionnement. L'unique mouvement de l'organe d'actionnement permet donc de verrouiller parfaitement l'appareil sur le rail.

Avantageusement, le premier moyen de fixation comporte au moins une encoche d'accrochage ou crochet formé sur l'organe d'actionnement et destiné à recevoir le rebord du rail de support. Ainsi le mouvement de translation du premier moyen de fixation constitué par ce crochet correspond au mouvement de translation de l'organe d'actionnement.

Avantageusement, le dispositif de fixation comprend un dispositif apte à assurer le maintien simultané des moyens de fixation dans leur position de verrouillage ou de déverrouillage. Il pourra s'agir par exemple de points durs déformables de manière élastique lors de la translation de l'organe d'actionnement.

Le dispositif selon l'invention est particulièrement adapté pour verrouiller sur un rail de support une pluralité de modules électroniques, tels que par exemple différents modules d'un automate programmable modulaire, connectés entre eux par l'intermédiaire de connecteurs latéraux, comme décrit dans le brevet US 5,775,955. Dans une telle configuration, lorsqu'un premier module est présent sur le rail, un second module devant être connecté à ce premier module est amené en appui contre les rebords du rail et est coulissé jusqu'à être connecté au premier module. Une fois le second module connecté, on actionne son dispositif de fixation pour pouvoir le verrouiller sur le rail. Le dispositif de fixation selon l'invention permet donc à un utilisateur de venir connecter et verrouiller rapidement un grand nombre de modules avec un minimum de manipulations.

D'autres caractéristiques et avantages vont apparaître dans la description détaillée qui suit en se référant à un mode de réalisation donné à titre d'exemple et représenté par les dessins annexés sur lesquels :
- Les figures 1A et 1B représentent, en perspective, l'intérieur d'un appareil électrique doté du dispositif de fixation selon l'invention respectivement en position de déverrouillage par rapport à un rail de support et en position de verrouillage sur ce rail de support.
- Les figures 2A et 2B représentent, en vue de face, l'intérieur de l'appareil électrique doté du dispositif de fixation selon l'invention, respectivement en position de déverrouillage par rapport à un rail de support et en position de verrouillage sur ce rail de support.
- La figure 3 représente une vue éclatée en perspective de l'appareil électrique et du dispositif de fixation destiné à être monté sur ledit appareil.
- Les figures 4A et 4B représentent en coupe selon A-A respectivement sur les figures 2A et 2B l'appareil électrique respectivement en position de verrouillage sur le rail de support et en position de déverrouillage par rapport à ce rail.
- La figure 5 représente, en vue de face, l'arrière de l'appareil électrique fixé sur le rail de support.
- La figure 6 représente en détail la platine utilisée dans le dispositif de fixation selon l'invention.
- La figure 7 représente une biellette utilisée dans le dispositif de fixation de l'invention.

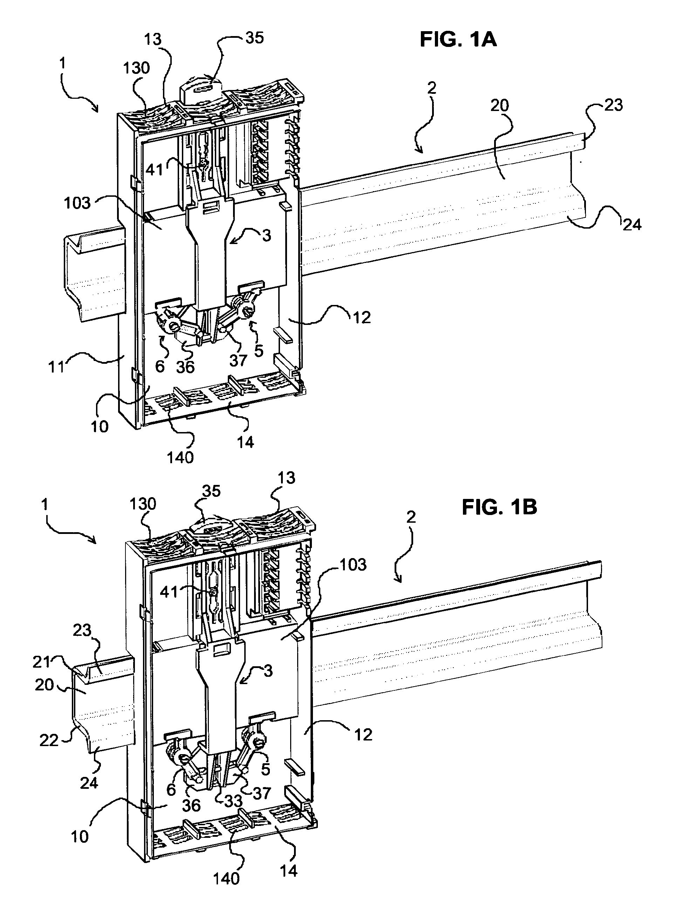

L'invention va à présent être décrite en liaison avec les figures 1A à 7.

L'invention consiste en un dispositif de fixation d'un appareil 1 électrique sur un rail 2 de support. Ce rail 2 de support s'étend selon un axe principal (A), est profilé et plié de manière à présenter en section transversale une forme en chapeau. Il présente une âme 20 centrale raccordée à deux ailes 21, 22 parallèles, repliées de manière à former deux rebords 23, 24 situés dans un même plan de part et d'autre de l'âme centrale. Le rebord 23 supérieur du rail forme un chant 25 supérieur et le rebord 24 inférieur du rail forme un chant 26 inférieur. Le rail peut supporter plusieurs appareils électriques disposés de manière adjacente et éventuellement connectés entre eux.

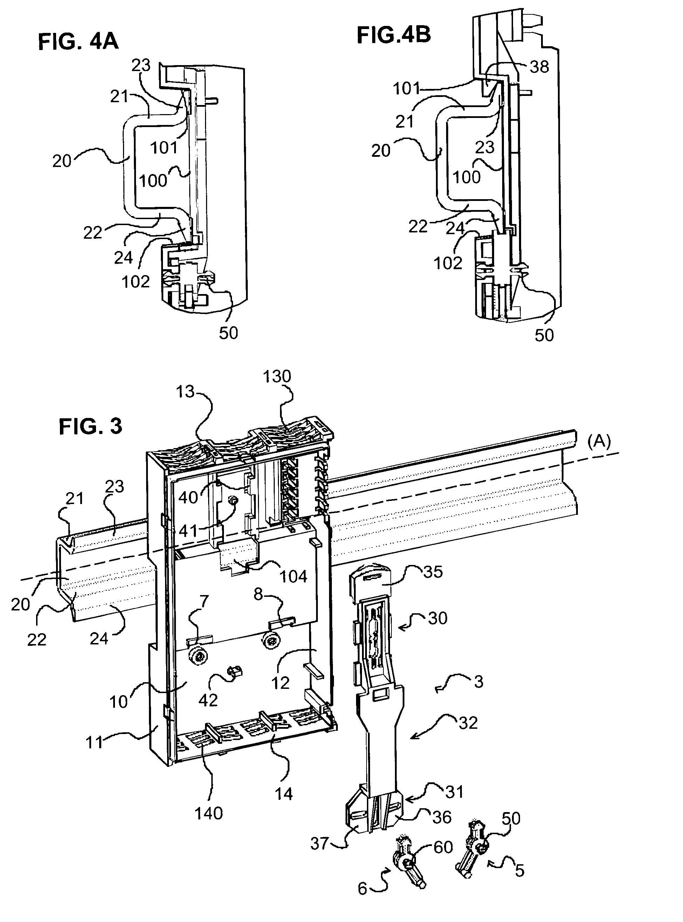

L'appareil 1 électrique comporte un boîtier présentant un panneau avant (non représenté), un panneau 10 arrière, deux panneaux 11, 12 latéraux, un panneau 13 supérieur et un panneau 14 inférieur. Le panneau 10 arrière présente un renfoncement 103 formant un passage de guidage au fond duquel vient prendre appui les deux rebords 23, 24 du rail 2. Ce passage de guidage est formé sur toute la largeur du boîtier et présente un écartement entre sa face supérieure et sa face inférieure légèrement supérieur à la largeur du rail 2 de support. Le passage de guidage définit donc sur la face externe du panneau 10 arrière du boîtier, un fond 100 plat contre lequel viennent s'appuyer les deux rebords 23, 24 du rail 2 de support, une face 101 supérieure et une face 102 inférieure formant un angle légèrement supérieur à 90° avec le fond 100 du passage de guidage (figures 4A et 4B). L'appareil 1 électrique est fixé par son panneau 10 arrière et pour cela est amené suivant un axe perpendiculaire au plan d'appui formé par les deux rebords 23, 24 du rail 2 de support de sorte que l'axe (A) du rail 2 de support soit parallèle à la largeur du boîtier et que les rebords 23, 24 du rail 2 de support viennent en appui contre le fond 100 du passage de guidage formé sur le panneau 10 arrière du boîtier.

Sur les figures 1A et 1B, on remarque également que le boîtier présente des fentes 130, 140 d'aération à travers son panneau 13 supérieur et son panneau 14 inférieur.

Le dispositif de fixation selon l'invention est disposé à l'intérieur du boîtier de l'appareil 1 électrique et fixé sur la face interne du panneau 10 arrière du boîtier (figure 3). Le dispositif de fixation selon l'invention présente notamment l'avantage de ne pas obstruer les fentes 140 d'aération formées sur le panneau 14 inférieur du boîtier de l'appareil 1 électrique.

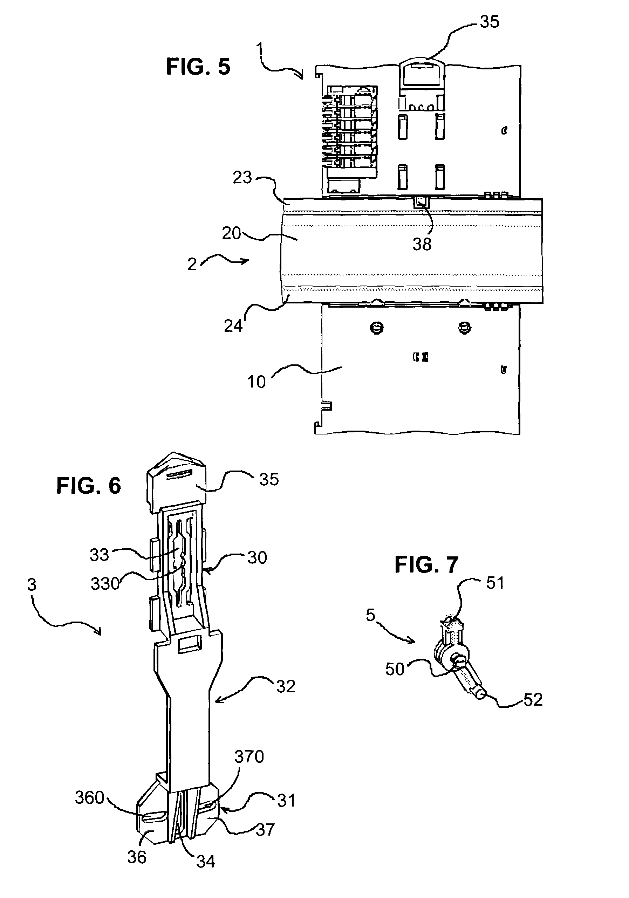

Le dispositif de fixation comporte un organe d'actionnement constitué d'une platine 3 allongée, coulissante dans une glissière formée à l'intérieur du boîtier. Comme représenté en figures 1A et 1B, la platine 3 suit la forme interne du panneau 10 arrière du boîtier. En liaison avec les figures 3 et 6, la platine présente donc principalement une partie 30 supérieure et une partie 31 inférieure s'étendant sur la surface interne du panneau 10 arrière, de part et d'autre de la surface interne du renfoncement 103 du panneau 10 arrière et d'une partie 32 intermédiaire épousant ladite surface interne du renfoncement 103. Cette partie 32 intermédiaire présente une longueur plus importante que la distance d'écartement entre les deux arêtes internes parallèles formées par le renfoncement 103, afin de conférer à la platine 3 une liberté en translation.

La glissière est formée de sorte que la platine 3 peut se translater suivant sa longueur selon un axe perpendiculaire à l'axe (A) du rail 2 de support sur lequel l'appareil 1 électrique est disposé et parallèle au plan d'appui formé par les rebords 23, 24 du rail 2 de support. Cette glissière est composée d'un rail 40 formé sur la face interne du panneau 10 arrière du boîtier au-dessus du renfoncement 103, dans lequel coulisse la partie 30 supérieure de la platine 3, et de deux tenons 41, 42. Un premier tenon 41 (figure 3) coopère avec un premier guide 33 formé sur la partie 30 supérieure de la platine 3 et un second tenon 42 (figure 3) coopère avec un second guide 34 formé sur la partie 31 inférieure de la platine 3.

Selon l'invention le premier guide 33 formé sur la partie 30 supérieure de la platine 3 présente deux étranglements ou bossages 330 successifs formant des points durs déformables de manière élastique lors de la translation de la platine 3 (figure 6). Ces points durs permettent de marquer les différentes positions de la platine 3 lors de la translation dans la glissière. Dans le sens du verrouillage de l'appareil 1 électrique sur le rail 2 de support, l'extrémité supérieure de fin de course du second guide 34 constitue une butée au mouvement de translation de la platine 3 dans la glissière.

Pour pouvoir être commandée par un utilisateur, la platine 3 présente une extrémité supérieure formant une languette 35 faisant saillie hors du boîtier par une ouverture formée à travers le panneau 13 supérieur du boîtier.

La platine 3 comporte également un premier moyen de fixation constitué d'un crochet 36 (figure 4B) destiné à recevoir un rebord 23 du rail 2 de support et formé en vis-à-vis d'une ouverture 104 formée à travers le panneau 10 arrière du boîtier, à l'angle situé entre la face 101 supérieure du passage de guidage de l'appareil 1 électrique et le fond 100 de ce passage (figure 3). Lors de la translation de la platine 3 dans le sens du verrouillage de l'appareil 1 électrique, ce crochet 36 va faire saillie de l'ouverture 104, à l'extérieur du boîtier pour venir s'engager sur le rebord 23 supérieur du rail 2 de support.

La platine 3 présente à son extrémité opposée à la languette 35, sur sa partie 31 inférieure, deux ailes 36, 37 symétriques (figure 6) formées dans le même plan que la partie 31 inférieure de la platine 3. Dans chacune des ailes 36, 37 est formée une ouverture 360, 370 oblongue orientée selon un axe perpendiculaire à l'axe de translation de la platine 3. Chacune de ces ouvertures 360, 370 oblongues forme un rail de coulissement destiné à recevoir une extrémité 52 (figure 7) d'une biellette 5, 6. Ces biellettes 5, 6 constituent le second moyen de fixation de l'appareil (1) électrique sur le rail 2 de support et chacune d'elles forme un point de fixation distinct sur le rail 2 de support. Ces biellettes 5, 6 sont identiques, solidaires du boîtier et montées en rotation sur la face interne du panneau 10 arrière du boîtier, symétriquement par rapport à l'axe de translation de la platine 3. L'axe de rotation 50, 60 des biellettes 5, 6 est perpendiculaire au plan formé par la surface interne du panneau 10 arrière du rail de support. L'extrémité libre de chaque biellette 5, 6, située au-delà de son axe de rotation par rapport à l'extrémité solidaire de la platine 3, est disposée en vis à vis d'une ouverture 7, 8 formée sur le boîtier. Ces ouvertures 7, 8 (figure 3) sont formées de part et d'autre de la platine 3, à travers le panneau 10 arrière du boîtier, à l'angle formé entre le fond 100 du passage de guidage du boîtier et la face 102 inférieure de ce passage.

Avantageusement, les biellettes 5, 6 comportent de part et d'autre de leur axe de rotation deux parties liées de manière rigide et décalées angulairement. Avantageusement encore, l'extrémité libre de chaque biellette 5, 6 peut présenter une nervure 51 destinée à recevoir le rebord inférieur du rail 2 de support (figure 7).

Entre les deux ailes 36, 37 de la platine 3, est formé le second guide 34 coopérant avec le tenon 42 formé sur la face interne du panneau 10 arrière du boîtier pour guider la platine 3 en translation relativement au boîtier. Ce second 34 guide aura par exemple une forme en trou de serrure pour faciliter le montage/démontage de la platine 3.

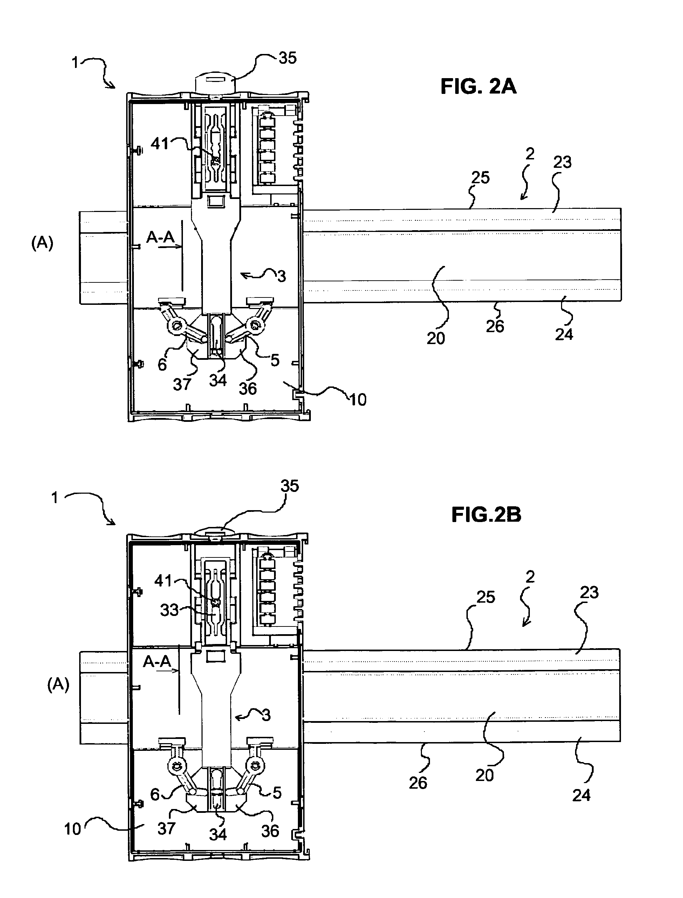

Selon l'invention, une fois que les deux rebords 23, 24 du rail 2 de support sont en appui contre le fond 100 du passage de guidage du boîtier de l'appareil 1 électrique, un utilisateur vient verrouiller ledit boîtier sur le rail 2 de support. Pour effectuer ce verrouillage, l'utilisateur agit sur la languette 35 de la platine 3. En position de déverrouillage, la languette 35 est relevée et la platine 3 est en position haute. En appuyant sur la languette 35, la platine 3, guidée par la glissière formée sur la face interne du panneau 10 arrière du boîtier, coulisse parallèlement au plan d'appui formé par les rebords 23, 24 du rail 2 de support et perpendiculairement à l'axe principal (A). En se translatant, le crochet 36 de la platine 3 fait saillie hors de l'ouverture 104 et vient s'engager sur le rebord 23 supérieur du rail 2 de support. La translation de la platine 3 provoque également le coulissement de chacune des extrémités des biellettes 5, 6 dans les ouvertures 360, 370 oblongues formées sur les ailes 36, 37 de la platine 3. Ce coulissement de l'extrémité des biellettes 5, 6 provoque la rotation des biellettes 5, 6 autour de leur axe 50, 60 de rotation. Les biellettes 5, 6 étant disposées parallèlement, les rotations des deux biellettes 5, 6 s'effectuent dans des sens opposés. Grâce à cette rotation, l'extrémité libre de chaque biellette 5, 6 vient en appui contre le chant 26 inférieur du rail 2 de support. Dans le cas où l'extrémité libre de chaque biellette 5, 6 présente une nervure 51, le rebord 24 inférieur du rail 2 de support est engagé dans cette nervure 51. Lorsque l'appareil 1 électrique est verrouillé sur le rail de support, la partie de chacune des biellettes 5, 6 située entre son axe de rotation et son extrémité libre reliée au rebord 24 du rail 2 de support suit un axe perpendiculaire à l'axe principal (A) du rail 2 de support (voir figure 2B). Avec une telle position des biellettes 5, 6, le verrouillage de l'appareil 1 électrique est irréversible sans une action volontaire sur la platine 3 de l'organe d'actionnement. En effet, tout effort parasite exercé sur le boîtier de l'appareil 1 électrique, dans un pan vertical et suivant un axe perpendiculaire à l'axe (A) du rail 2 de support, ne peut générer une force formant un couple suffisant pour déverrouiller les biellettes 5, 6.

Selon une variante de réalisation de l'invention, la platine et les biellettes ne forment qu'une seule pièce. Dans une telle configuration, le coulissement de l'extrémité de chaque biellette dans son ouverture oblongue respective est remplacé par une déformation élastique entre la biellette et la platine.

Il est bien entendu que l'on peut, sans sortir du cadre de l'invention, imaginer d'autres variantes et perfectionnements de détail et de même envisager l'emploi de moyens équivalents.

## Revendications

1. Dispositif de verrouillage d'un appareil (1) électrique sur un rail (2) de support à deux rebords (23, 24) opposés, ledit dispositif présentant au moins deux moyens de fixation, un premier moyen de fixation destiné à venir en contact avec un rebord (23) du rail (2) de support et un second moyen de fixation destiné à venir en contact avec le rebord (24) opposé du rail (2) de support, ces moyens de fixation étant mobiles et pouvant prendre une position de verrouillage sur leur rebord (23, 24) respectif du rail (2) de support ou une position de déverrouillage, ledit dispositif comprenant des moyens d'entraînement (3) reliant le premier moyen de fixation (38) au second moyen de fixation (5, 6) et aptes à transformer un mouvement de translation du premier moyen de fixation en un mouvement de rotation du second moyen de fixation, lesdits moyens d'entraînement comprenant un organe d'actionnement (3) apte à opérer un mouvement de translation solidaire du mouvement du premier moyen de fixation, **caractérisé en ce que** le second moyen de fixation comporte deux points de fixation distincts sur le rebord (24) du rail (2) de support.

2. Dispositif selon la revendication 1, **caractérisé en ce que** le mouvement de translation de l'organe d'actionnement (3) est réalisé perpendiculairement à l'axe (A) du rail (2) de support et parallèlement à un plan d'appui formé par les rebords (23, 24) du rail (2) de support.

3. Dispositif selon la revendication 1, **caractérisé en ce que** le second moyen de fixation comporte, pour chacun de ses points de fixation, une biellette (5, 6) solidaire de l'appareil (1) électrique et montée en rotation sur celui-ci, ladite biellette (5, 6) comportant une extrémité montée dans un rail (360, 370) de guidage formé dans l'organe d'actionnement et une extrémité libre apte à venir bloquer ledit appareil (1) électrique sur un rebord (24) du rail (2) de support.

4. Dispositif selon la revendication 1, **caractérisé en ce que** le second moyen de fixation comporte pour chacun de ses points de fixation une biellette solidaire de l'appareil (1) électrique et montée en rotation sur celui-ci, ladite biellette et l'organe d'actionnement étant reliées par l'intermédiaire d'une pièce déformable de manière élastique.

5. Dispositif selon la revendication 4 **caractérisé en ce que** la biellette, la pièce déformable de manière élastique et l'organe d'actionnement ne font qu'une seule pièce.

6. Dispositif selon l'une des revendications 1 à 5, **caractérisé en ce que** le mouvement de translation de l'organe d'actionnement (3) entraîne les rotations des deux biellettes (5, 6) dans des sens opposés.

7. Dispositif selon l'une des revendications 3 à 6, **caractérisé en ce que** les biellettes (5, 6) sont montées en parallèle, symétriquement par rapport à l'axe de translation de l'organe d'actionnement.

8. Dispositif selon l'une des revendications 3 à 7, **caractérisé en ce qu'**à son extrémité libre, la biellette (5, 6) présente une nervure (51) dans laquelle est apte à venir se loger le rebord (24) du rail (2) de support lorsque le second moyen de fixation est dans sa position de verrouillage.

9. Dispositif selon l'une des revendications 1 à 8, **caractérisé en ce que** l'organe d'actionnement est à commande manuelle.

10. Dispositif selon l'une des revendications 1 à 9, **caractérisé en ce que** le premier moyen de fixation est formé sur l'organe d'actionnement.

11. Dispositif selon la revendication 10, **caractérisé en ce que** le premier moyen de fixation comporte au moins un crochet (38) destiné à recevoir le rebord (23) du rail (2) de support.

12. Dispositif selon l'une des revendications 1 à 11, **caractérisé en ce qu'**il comprend un dispositif apte à assurer le maintien simultané des moyens de fixation dans leur position de verrouillage ou de déverrouillage.

## Claims

1. Device for locking an electric apparatus (1) onto a supporting rail (2) with two opposite raised edges (23, 24), said device having at least two attachment means, a first attachment means intended to come into contact with one raised edge (23) of the supporting rail (2) and a second attachment means intended to come into contact with the opposite raised edge (24) of the supporting rail (2), these attachment means being movable and able to take a locked position on their respective raised edge (23, 24) of the supporting rail (2) or an unlocked position, said device comprising driving means (3) connecting the first attachment means (38) to the second attachment means (5, 6) and capable of converting a translation movement of the first attachment means into a rotary movement of the second attachment means, said driving means comprising an actuation member (3) capable of causing a translation movement integral with the movement of the first attachment means, **characterized in that** the second attachment means comprises two distinct attachment points on the raised edge (24) of the supporting rail (2).

2. Device according to Claim 1, **characterized in that** the translation movement of the actuation member (3) is performed perpendicularly to the axis (A) of the supporting rail (2) and parallel to a bearing plane formed by the raised edges (23, 24) of the supporting rail (2).

3. Device according to Claim 1, **characterized in that** the second attachment means comprises, for each of its attachment points, a rod (5, 6) fixedly attached to the electric apparatus (1) and mounted in rotation thereon, said rod (5, 6) comprising one end mounted in a guide rail (360, 370) formed in the actuation member and one free end capable of coming to lock said electric apparatus (1) onto a raised edge (24) of the supporting rail (2).

4. Device according to Claim 1, **characterized in that** the second attachment means comprises, for each of its attachment points, a rod fixedly attached to the electric apparatus (1) and mounted in rotation thereon, said rod and the actuation member being connected by means of an elastically deformable part.

5. Device according to Claim 4, **characterized in that** the rod, the elastically deformable part and the actuation member form a single part.

6. Device according to one of Claims 1 to 5, **characterized in that** the translation movement of the actuation member (3) rotates the two rods (5, 6) in opposite directions.

7. Device according to one of Claims 3 to 6, **characterized in that** the rods (5, 6) are mounted in parallel, symmetrically relative to the axis of translation of the actuation member.

8. Device according to one of Claims 3 to 7, **characterized in that**, at its free end, the rod (5, 6) has a rib (51) in which the raised edge (24) of the supporting rail (2) is capable of coming to lodge when the second attachment means is in its locked position.

9. Device according to one of Claims 1 to 8, **characterized in that** the actuation member is controlled manually.

10. Device according to one of Claims 1 to 9, **characterized in that** the first attachment means is formed on the actuation member.

11. Device according to Claim 10, **characterized in that** the first attachment means comprises at least one hook (38) intended to receive the raised edge (23) of the supporting rail (2).

12. Device according to one of Claims 1 to 11, **characterized in that** it comprises a device capable of simultaneously holding the attachment means in their locked or unlocked position.

## Patentansprüche

1. Vorrichtung zur Verriegelung eines elektrischen Geräts (1) auf einer Tragschiene (2) mit zwei einander gegenüberliegenden Randleisten (23, 24), wobei die Vorrichtung mindestens zwei Befestigungseinrichtungen aufweist, eine erste Befestigungseinrichtung, die dazu bestimmt ist, mit einer Randleiste (23) der Tragschiene (2) in Kontakt zu kommen, und eine zweite Befestigungseinrichtung, die dazu bestimmt ist, mit der gegenüberliegenden Randleiste (24) der Tragschiene (2) in Kontakt zu kommen, wobei diese Befestigungseinrichtungen beweglich sind und eine Verriegelungsstellung auf ihrer jeweiligen Randleiste (23, 24) der Tragschiene (2) oder eine Entriegelungsstellung einnehmen können, wobei die Vorrichtung Antriebseinrichtungen (3) enthält, die die erste Befestigungseinrichtung (38) mit der zweiten Befestigungseinrichtung (5, 6) verbinden und eine Translationsbewegung der ersten Befestigungseinrichtung in eine Drehbewegung der zweiten Befestigungseinrichtung umwandeln können, wobei die Antriebseinrichtungen ein Betätigungsorgan (3) enthalten, das eine fest mit der Bewegung der ersten Befestigungseinrichtung verbundene Translationsbewegung durchführen kann, **dadurch gekennzeichnet, dass** die zweite Befestigungseinrichtung zwei getrennte Befestigungspunkte auf der Randleiste (24) der Tragschiene (2) aufweist.

2. Vorrichtung nach Anspruch 1, **dadurch gekennzeichnet, dass** die Translationsbewegung des Betätigungsorgans (3) lotrecht zur Achse (A) der Tragschiene (2) und parallel zu einer von den Randleisten (23, 24) der Tragschiene (2) geformten Auflageebene durchgeführt wird.

3. Vorrichtung nach Anspruch 1, **dadurch gekennzeichnet, dass** die zweite Befestigungseinrichtung für jeden ihrer Befestigungspunkte eine fest mit dem elektrischen Gerät (1) verbundene und drehbar auf dieses montierte Hebelstange (5, 6) aufweist, wobei die Hebelstange (5, 6) ein Ende, das in eine im Betätigungsorgan geformte Führungsschiene (360, 370) eingesetzt ist, und ein freies Ende aufweist, das das elektrische Gerät (1) auf einer Randleiste (24) der Tragschiene (2) blockieren kann.

4. Vorrichtung nach Anspruch 1, **dadurch gekennzeichnet, dass** die zweite Befestigungseinrichtung für jeden ihrer Befestigungspunkte eine fest mit dem elektrischen Gerät (1) verbundene und auf diesem drehbar montierte Hebelstange aufweist, wobei die Hebelstange und das Betätigungsorgan mittels eines elastisch verformbaren Bauteils verbunden sind.

5. Vorrichtung nach Anspruch 4, **dadurch gekennzeichnet, dass** die Hebelstange, das elastisch verformbare Bauteil und das Betätigungsorgan aus einem Stück bestehen.

6. Vorrichtung nach einem der Ansprüche 1 bis 5, **dadurch gekennzeichnet, dass** die Translationsbewegung des Betätigungsorgans (3) die Drehungen der zwei Hebelstangen (5, 6) in entgegengesetzte Richtungen nach sich zieht.

7. Vorrichtung nach einem der Ansprüche 3 bis 6, **dadurch gekennzeichnet, dass** die Hebelstangen (5, 6) parallel, symmetrisch bezüglich der Translationsachse des Betätigungsorgans, montiert sind.

8. Vorrichtung nach einem der Ansprüche 3 bis 7, **dadurch gekennzeichnet, dass** die Hebelstange (5, 6) an ihrem freien Ende eine Rippe (51) aufweist, in die sich die Randleiste (24) der Tragschiene (2) einfügen kann, wenn die zweite Befestigungseinrichtung in ihrer Verriegelungsstellung ist.

9. Vorrichtung nach einem der Ansprüche 1 bis 8, **dadurch gekennzeichnet, dass** das Betätigungsorgan manuell gesteuert wird.

10. Vorrichtung nach einem der Ansprüche 1 bis 9, **dadurch gekennzeichnet, dass** die erste Befestigungseinrichtung auf dem Betätigungsorgan geformt ist.

11. Vorrichtung nach Anspruch 10, **dadurch gekennzeichnet, dass** die erste Befestigungseinrichtung mindestens einen Haken (38) aufweist, der dazu bestimmt ist, die Randleiste (23) der Tragschiene (2) aufzunehmen.

12. Vorrichtung nach einem der Ansprüche 1 bis 11, **dadurch gekennzeichnet, dass** sie eine Vorrichtung enthält, die den gleichzeitigen Halt der Befestigungseinrichtungen in ihrer Verriegelungs- oder Entriegelungsstellung gewährleisten kann.
